# EUROPEAN PATENT APPLICATION

(11) **EP 1 331 559 A2**
(43) Date of publication of application: **30.07.2003**
(21) Application number: 03380011.1
(22) Date of filing: 28.01.2003
(51) Int. Cl.: G06F 9/44

(54) **System for personalizing applications of a mobile terminal SIM or USIM card**

(30) Priority: 29.01.2002 ES 200200200
(71) Applicant: Vodafone Group PLC, Newbury, Berkshire RG14 1JX (GB)
(72) Inventor: Comez Diaz, Esther Consuelo, 28980 Parla, Madrid (ES); Molina Zamora, Fernando, 28003 Madrid (ES)
(74) Representative: Davila Baz, Angel

(57) **Abstract**

It is characterized in that it comprises a graphic user interface (1) based on a web page with a centralized server for interacting with the system and through which it configures its own application according to the preferences of the user of the mobile terminal (8), the created application being sent to an interpreter (3) that collects the created application and transforms it into a pseudocode language, which in turn is sent to an applications generator (4) that transforms the pseudocode language application into a high-level language and performs processes for sending the application in downloadable code to an applications download module (5) that sends the application in downloadable code to the SIM (7) or USIM card (7) of the mobile terminal (8), the former storing the new application.

It therefore permits storing applications in the card according to user needs.

## Description

### OBJECT OF THE INVENTION

The invention concerning us, as expressed in the title of this specification, refers to a system whose object is to permit the personalization of the applications of a SIM (Subscriber Identity Module where the data authenticating a terminal before the mobile telephone network operator is located) card or USIM (Universal Subscriber Identity Module, which is equivalent to the SIM card but designed for third generation mobile telephony) card, such that the user can visualize the SIM card applications, according to his own needs, through the display screen of his mobile terminal, preventing him/her from getting lost browsing among unnecessary options lists.

### BACKGROUND OF THE INVENTION

In the world of mobile telephony, it is very well known to use terminals that, for their functioning, need a SIM card (Subscriber Identity Modules) consisting of an operative system recorded on a smart card, plus a set of files with mobile network operator and terminal user data, and a series of applications that the operator designs so that the user can easily access its services. Among the user data, the most important included on the card are those which authenticate the terminal before the network.

The invention is valid for the Subscriber Identity Module in both the SIM and USIM card, hereinafter U/SIM.

At first, mobile terminals were only capable of sending commands to the SIMs, whereas the latter were only capable of responding to commands received from the mobile terminal.

An evolution subsequently occurred in mobile terminals and in SIM cards that permitted mobile terminals to send commands to the SIM, and for the SIM to respond to commands received from the mobile terminal as well as to send commands to it. These commands permit, for example, the SIM to request making a call once a short message has been sent, to show an options list to the user, to request data, etc.

The applications existing in the SIM card capable of sending commands to the mobile terminal are known with the name "SIM Toolkit Applications". In UMTS, they are known with the name "USIM Toolkit Applications".

The Toolkit applications are an optional feature of U/SIM cards.

Currently, almost all mobile telephone users have a corporative U/SIM Toolkit application in their U/SIM that gives them access to operator services such as: information on news, the stock exchange, economy, lotteries, customer service, etc. This application is based on options lists shown to the user as he/she advances through them and they normally end in sending a short message requiring the requested service, or in making a call to an operator number.

The drawback is posed when the number of these services is high, since the current capacities of a SIM card in terms of memory are fairly limited (32K). This forces the operator to chose from among its available services those which it believes to be the most useful for the majority of the users, although not all of them can be satisfied.

In order to prevent the user from getting lost browsing in options lists, a large amount of options (more than 10) are tended to be compacted into each one of them. The majority of current mobile terminals do not have user-friendly interfaces for working with this type of lists. For example, if the user wants to access option number 10, it is necessary in many cases to push the same button ten times, consequentially causing antipathy of the user against the application. Especially if taking into account that, of the ten options, the majority of users do not normally use more than three.

Therefore, the greater number of services appearing every day are arranged in a fixed manner in which the user cannot intervene to adapt it to his/her needs and preferences.

### DESCRIPTION OF THE INVENTION

In order to solve the previously mentioned drawbacks, the invention has developed a system for personalizing the applications of a mobile terminal U/SIM card that is characterized in that it comprises a graphic user interface, based on a web page with a centralized server, for interacting with the system, and through which an application is configured according to the mobile terminal user preferences. The graphic user interface is materialized in a personal computer, for example, which is a means owned by a large amount of users.

Once the application is created, it is sent to an interpreter that picks it up and transforms it into a pseudocode language, which in turn sends it to an applications generator that transforms the pseudocode language application into a high level language and performs processes in order to send the application in a downloadable code to an applications download module which sends the application in downloadable code through the mobile telephone network to the mobile terminal U/SIM card so that the card stores the new application.

The application configured by the user through the graphic interface is based on the operator services or on its own services, the interface therefore has means for recovering the operator services, means for personalizing the operator services, means for creating its own services based on the technology supported by the U/SIM cards by means of the creation of task lists which permit creating the new services, and means for accessing an applications database for modifying, eliminating, visualizing and storing the applications the user wants.

Therefore, the system of the invention permits choosing the services from among all those possible from the operator, the clustering thereof into lists as required by the user, the modification of their names, the order or appearance and even the creation of completely particular services invented by the user, which constitutes an advance in the state of the art.

The user interface permits the user to store different applications he/she created, and sending them to his/her mobile terminal when desired.

The interpreter has a control module that receives the application created in the graphic user interface, when said application is sent by the user, and accesses a rules file from which the mechanisms for transforming the received application into the pseudocode language are obtained.

The interpreter of the invention permits carrying out any change in the generation of the pseudocode or adding a new command, it is therefore enough to introduce its description into the interpreter's rules file from which the mechanisms are obtained for transforming the received application into the pseudocode language.

With regard to the applications generator, this comprises a control module that receives the application in pseudocode and accesses at least one rules file and a pattern file, from which it obtains the mechanisms for transforming the pseudocode application into a high-level language application.

The applications generator uses a plurality of high-level languages, it therefore comprises a rules file and a pattern file for each high-level language used, such that the control module accesses the rules file and the corresponding pattern file that permits translating from the pseudocode language to the required high-level language.

The pattern file is equivalent to a form whose content indicates how to treat the pseudocode for transforming it into a high-level language according to the rules stored in the rules file.

In an embodiment of the invention, the high-level language used by the applications generator is a language independent from the U/SIM card ("interpreted" language).

According to the description made, the interpreter constitutes an independent block of the applications generator, but according to an embodiment of the invention, it is possible for said interpreter to be implemented in the applications generator itself.

Once the application in the high-level language is obtained, it performs different processes, according to the high-level language used, to obtain the desired code, such as, for example, compilation, optimization, etc.

The applications download module has a control module receiving the application in downloadable code format together with the terminal user's telephone number (MSISDN), previously introduced by said user and which circulates with the application, and accesses a system users database, which includes the data regarding the U/SIM card, these data being the high-level language supported by the U/SIM card, its telephone number (MSISDN), the card series number, load/erase protocol, the supported transport carriers, the available space in the card's memory and the loaded applications. In this manner, through the control module, the applications download module determines which protocol is supported by the U/SIM card and the preferred transport carrier, and the control module sends the application to a load sub-module corresponding to the protocol supported by the U/SIM card, together with the data of the preferred transport carrier. With this information, the load sub-module accesses a carrier module corresponding to the chosen carrier and the latter sends the application. If the chosen transport carrier were not available for any reason, then the load sub-module would communicate this to the control module in order to choose another transport carrier.

The applications download module is provided with a plurality of load sub-modules depending on the number of application load/download protocols supported by the different U/SIM cards.

In an embodiment of the invention, each load sub-module supports a plurality of transport carriers, for that they are connected to a plurality of carrier modules.

The load sub-module notifies the applications generator that said download has been carried out. In turn, the applications generator communicates this to the user interface.

After accessing the system users database, if the applications download module verifies that the U/SIM card has no available space, it indicates that there is not enough space to download the application, and the generator module informs the user interface so that the user knows the result.

Prior to downloading an application through the download module, the applications generator requests said download module to eliminate the old application on the U/SIM card, and the download module responds indicating if the operation was carried out, was not carried out due to an error occurring, or because there was no application to erase. In any of these cases, the applications generator requests the application load operation except when the download module was not able to erase the old application because an error occurred.

The system users database is updated each time an application is downloaded or eliminated.

In order to aid in better understanding this specification and forming an integral part thereof, a series of drawings are attached below which show the object of the invention with an illustrative and non-limiting character.

### BRIEF DESCRIPTION OF THE DRAWINGS

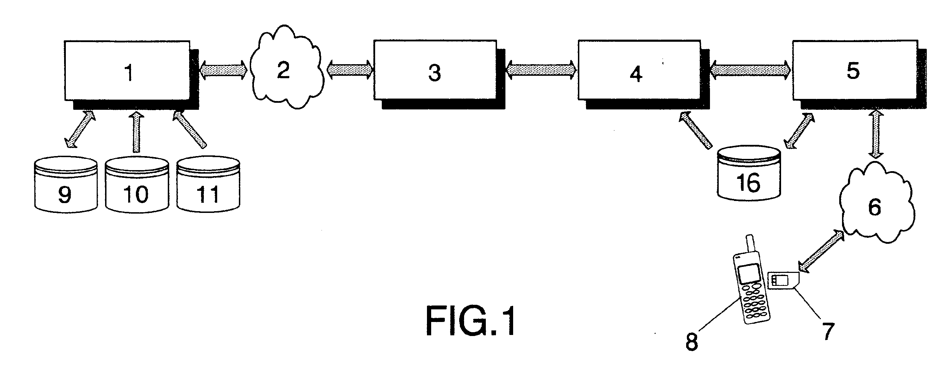

Figure 1.- Shows a general functional block diagram of a possible embodiment example of the system of the invention.

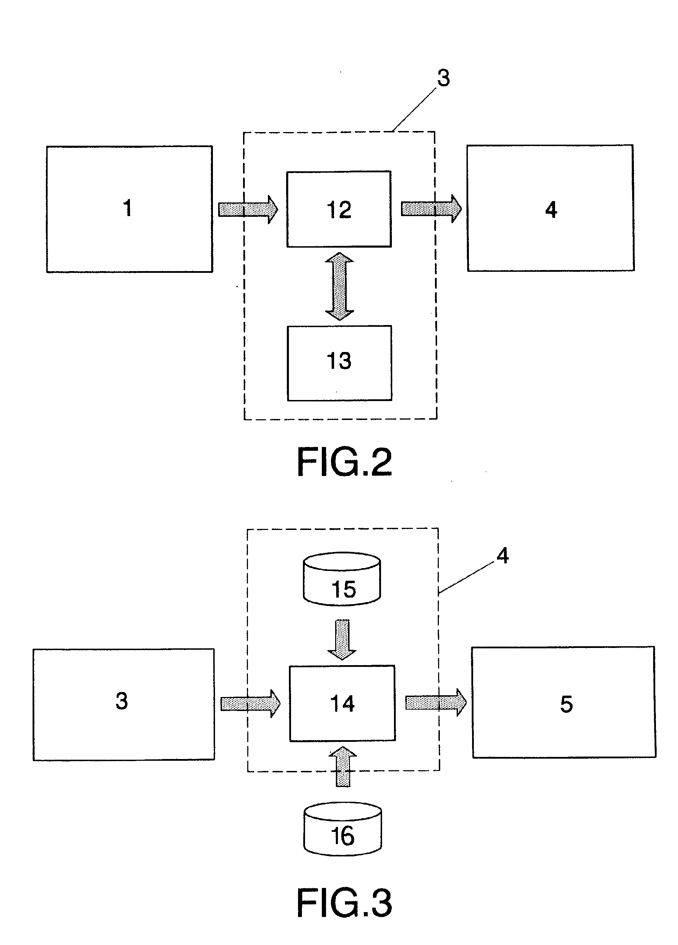

Figure 2.- Shows a general functional block diagram of a possible embodiment example of the interpreter shown in the previous figure.
Figure 3.- Shows a general functional block diagram of a possible embodiment example of the applications generator module shown in figure 1.

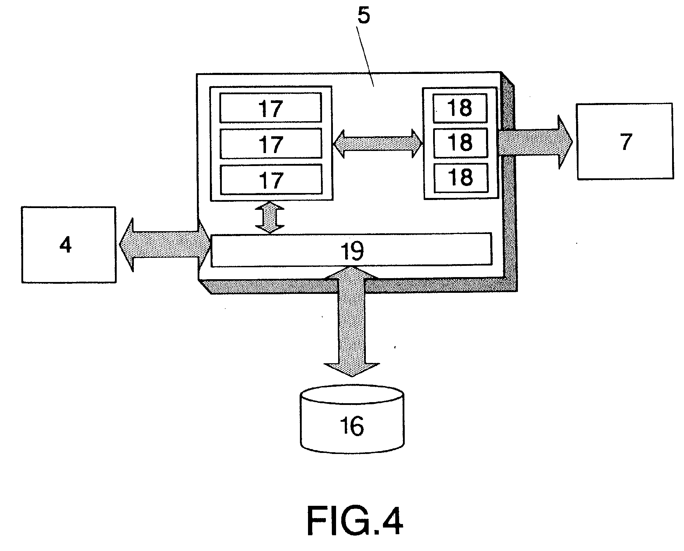

Figure 4.- Shows a general functional block diagram of a possible embodiment example of the download module shown in figure 1.

### DESCRIPTION OF THE PREFERRED EMBODIMENT

A description of the invention is made below based in the aforementioned figures.

The system of the invention comprises a user interface 1 materialized in a personal computer (PC) and which is based on a web page with centralized server.

The user interface provides users of mobile terminals 8 with means for interacting with the system of the invention for the purpose of designing his/her own application based on the services offered by the operator of the mobile telephone network 6, and even for designing his/her own services.

To do so, the user interface 1 comprises an operator services database 9 where a list is stored of all the accessible operator services of the mobile telephone network 6 and which can be included in the particular applications of the users.

Furthermore, the user interface 1 has a task database 10 for constructing particular services that are designed by using a subset of the same tasks used for developing an operator service.

The user interface 1 has a database 11 for storing the designed applications, where several applications can be stored such that the user can visualize, eliminate, modify and download any of the stored applications, and therefore the applications designed by the user do not have to be sent directly to the SIM card 7 of the mobile terminal 8, but rather they can be previously stored in the database 11. The application storage format must be comprehensible for the graphic user interface 1.

At this point, it is important to mention that a service is composed of the concatenation of a series of commands and an application is composed of a series of services and/or group of services, where a group of services is formed by a plurality of services. Each one of the commands constituting the service needs a data or parameters set for its proper execution.

The commands are also called tasks, and they can be of three types:
- Commands belonging to the SIM Toolkit standard, which are called proactive commands.
- GSM commands, which constitute the basic command type in which the mobile terminal orders the U/SIM card.
- Proprietary commands, which are all those commands not belonging to any standard and have been invented to achieve greater functionality and flexibility of the system.

A service offered by an operator to a user is translated for the U/SIM card in carrying out a series of commands or tasks. For example, a news service only requires for the U/SIM card to order the terminal to send a short message with a specific content to an already established number (normally corresponding to the news server). However, a service could be considered that offered the user the possibility to erase all his/her short messages at the same time, in which case the service requires the U/SIM card to select the file containing the short messages and update their entries one by one, marking them as erased (command types).

Each one of the commands constituting a service needs a data or parameters set for its proper execution. Thus, for example, the proactive command known as "short message sending" (SMS) needs a destination number, a server center number and a message content. The content of these parameters can be incorporated by the system itself or by the user thereof. When it is the user who directly decides the content of some of these parameters, then the service is personalized. For example, a user may want to implement a service that simply always called the same person because his/her terminal does not have speed dialing or he/she simply does not know how to use it. In this case, he/she would select the proactive commands task in which the U/SIM card requests the terminal to carry out a voice call (SETUP CALL) and within this command, personalizes the destination number with the number of the person he/she wishes to call.

For both operator services and for the tasks, the graphic user interface must have enough information to describe the necessary parameters entered by the user, for example, telephone numbers, short message content, etc. which permit personalizing the service, and it must also contain system information permitting the graphic interface to manage these data.

Therefore, the graphic user interface permits adding one or several new services to the application or a new task to a particular service, creating service groups, erasing a service, service groups or a service task, previsualizing the designed application browser pattern, obtaining the services in the order of appearance of the display screen that the user wants, changing the names of services and service groups, organizing services such that they are more comfortable to work with by using lists and sub-lists, previsualizing the aspect of the application as it will appear on the terminal, modifying, eliminating, visualizing and storing a determined number of applications without the need to download any on the U/SIM card, and it shows all the information regarding the application download.

When the user downloads the application, this is sent through internet 2 to an interpreter 3 which receives the application designed by the user by means of the graphic interface 1 in the manner already described, and it converts it into a pseudocode language (bytecodes).

A pseudocode instructions repertoire can be constructed by using the application commands and the parameters thereof, which implement an intermediate level between the language used in the graphic user interface and the language used for constructing source files (high-level language) for sending the application to the U/SIM card 7 of the mobile terminal 8.

Therefore, the interpreter 3 has a control module 12 that receives each file of the application generated by the graphic user interface 1 and carries out the translation of these files by accessing a rules file 13 indicating how to carry out said translation. This configuration has the large advantage that, for adding a new instruction, it is enough to add its description in the rules file 13, which makes the system very versatile as it permits incorporating new pseudocodes and is also independent regarding the language used in the construction of the source files.

The rules file 13 is centralized such that several different versions thereof cannot exist.

Once the interpreter 3 obtains the application in pseudocode language, it sends it to an applications generator 4 that converts the pseudocode file into the source code file necessary for sending the application to the U/SIM card 7 of the terminal 8.

The applications generator 4 therefore has a control module 14 connected to a storage for pattern files and rules files 15, such that the control module 14 receives the pseudocode file coming from the interpreter 3 and accesses the corresponding pattern and rules file 15 which instruct it on how to carry out the translation to the high-level language. The applications generator 4 is capable of supporting the generation of source files in several different high-level languages, it therefore comprises a rules file and a pattern file 15 for each different high-level language.

The pattern file serves as the basis for the construction of the source file and consists of a form that has been filled out by an expert in the corresponding high-level language. The translation of the corresponding pseudocode file to the high-level language is obtained from the form and by means of the rules file.

Once the source file is obtained, a set of actions must be carried out on it such as compilation, optimization, etc., depending on the chosen language.

It is recommendable to use an "interpreted" language since its compilation is always independent from the hardware platform on which the designed application download is being carried out, which in this case is on the U/SIM card.

The choice of the high-level language may be carried out in different ways. If the environment in which the system must work almost always functions with a same language, then it is very useful to introduce the language choice among the system configurations and modify this field only when changing the language (it is assumed that this will seldom occur). If, on the contrary, the system is functioning in an environment in which several languages coexist, such as is the case in which the operator of the mobile telephone network 6 has distributed different platforms (Java, Microsoft, Multos, ...) among the users, then, it is necessary for the system to be capable of discriminating the high-level language to use according to the U/SIM card 7 used in the terminal 8.

It is therefore necessary for the system to know the U/SIM card type used, so it has a system users database 16 where a table is included with at least the user's telephone number, U/SIM card series number, as well as the high-level language, load and erase protocol, transport carrier or carriers, and the available space of the U/SIM card. It must also contain a multi-value field including the unique identifiers of the applications loaded in the U/SIM card.

Once the high-level language in "downloadable code" is obtained, it is sent to an applications download module 5 comprising a control module 19 connected to a plurality of download sub-modules 17, each one of which is foreseen for supporting the different applications load/download protocols used by the different U/SIM cards existing on the market, each load sub-module 17 being connected to a plurality of transport carrier modules 18 so as to permit the use of several transport carriers (short messages, Cell Broadcast,...) such that the control module receives the application in downloadable code format, apart from the user identifier, consisting of the telephone number from which it consults the available space the U/SIM card of the terminal has in the database 16, comparing it with the size of the code to be downloaded. If there is enough space, it continues with the operation, and in the contrary case, it returns a result code to the applications generator 4 indicating that there is not enough space, and in turn the applications generator communicates this to the graphic user interface 1.

If there is enough space in the U/SIM card, the download module 5, by means of its control module 19, consults the database 16 in order to obtain the load/erase protocol associated with the SIM and the preferred carrier, and it sends the data to the corresponding load sub-module 17 according to the protocol supported by the U/SIM card. The load sub-module 17 accesses the carrier module 18 from which the application is downloaded.

After carrying out the load in the U/SIM card, the download module 5 informs the applications generator 4 of the result thereof: correctly finalized, incorrect load, and in the latter case, what the cause was. The applications generator directly informs the graphic user interface of the load result.

In the specific case of the system of the invention, the application previously loaded into the U/SIM coming from this same system is eliminated before loading the new one. This operation is initiated by the applications generator 4 that requests the download module 5 to eliminate the application, attaching the client's telephone number. As in the case of loading, this request is forwarded to the corresponding load sub-module 17 together with the most suitable transport carrier 18, and the elimination is carried out. Once the elimination has finalized, correctly or incorrectly, the applications generator 4 is informed of the result. If the elimination was successfully completed, the applications generator 4 continues loading the new application. If the elimination of the old application was not successfully completed because the application was no longer loaded in the U/SIM card, the applications generator similarly continues loading.

In either case, when an error occurs, the process is interrupted and the graphic user interface 1 is informed of the error that occurred.

Once an application is loaded or erased, the download module 5 updates in the database 16 the available space in the U/SIM card and the data on the loaded applications.

The load/download carried out by means of the download module 5 to the U/SIM card 7 is obviously carried out through the mobile telephone network 6.

Applications are thus able to be stored in the U/SIM card 7 of mobile terminals 8 according to the needs of each user.

## Claims

1. A system for personalizing applications of a mobile terminal SIM or USIM card, in which the mobile terminals (8) have a SIM (Subscriber Identity Module) card (7) or USIM (Universal Subscriber Identity Module) card (7) containing the operator data of the mobile telephone network (6); **characterized in that** it comprises a graphic user interface (1), based on a web page with a centralized server, for interacting with the system, and through which an application of its own is configured according to the preferences of the user of the mobile terminal (8), the created application being sent to an interpreter (3) that collects the created application and transforms it into a pseudocode language, which in turn is sent to an applications generator (4) that transforms the pseudocode language application into a high-level language that performs processes to send the application in downloadable code to an applications download module (5) that sends the application in downloadable code to the SIM or USIM card of the mobile terminal (8), the card storing the new application.

2. A system for personalizing applications of a mobile terminal SIM or USIM card according to claim 1, **characterized in that** the application configured by the user is based on the operator services or its own services, the graphic user interface (1) therefore has means for recovering the operator services, means for personalizing the operator services, means for creating its own services based on the technology supported by the SIM or USIM cards by means of creating task lists which permit creating the new services, and means for accessing an applications database (11) for modifying, eliminating, visualizing and storing the applications that the user wants.

3. A system for personalizing applications of a mobile terminal SIM or USIM card according to claim 1, **characterized in that** the interpreter (3) comprises a control module (12) that receives the application created by means of the graphic user interface (1) and accesses a rules file (13) from which it obtains the mechanisms for transforming the received application into the pseudocode language.

4. A system for personalizing applications of a mobile terminal SIM or USIM card according to claims 2 and 3, **characterized in that** in order to add new pseudocodes to the applications, the description of the pseudocodes is introduced in the rules file (13) of the interpreter (3).

5. A system for personalizing applications of a mobile terminal SIM or USIM card according to claim 1, **characterized in that** the applications generator (4) comprises a control module (14) that receives the application in pseudocode and accesses at least one rules file and a pattern file (15), from which it obtains the mechanisms for transforming the pseudocode application into a high-level language application.

6. A system for personalizing applications of a mobile terminal SIM or USIM card according to claim 5, **characterized in that** the applications generator (4) uses a plurality of high-level languages, it therefore comprises a rules file and a pattern file (15) for each high-level language used.

7. A system for personalizing applications of a mobile terminal SIM or USIM card according to claims 5 or 6, **characterized in that** the applications generator (4) uses a language independent from the SIM or USIM card of the terminal ("interpreted" language).

8. A system for personalizing applications of a mobile terminal SIM or USIM card according to claim 1, **characterized in that** the applications generator (4) includes the interpreter (3).

9. A system for personalizing applications of a mobile terminal SIM or USIM card according to claim 1, **characterized in that** once the high-level language application is obtained, the applications generator (4) performs different processes, according to the high-level language used, in order to obtain the downloadable code.

10. A system for personalizing applications of a mobile terminal SIM or USIM card according to claim 1, **characterized in that** it has a system users database (16) that includes the data regarding the SIM or USIM card: supported high-level language, telephone number, card series number, load/erase protocol, supported transport carriers, available space in the card memory and loaded applications, which is updated each time an application is downloaded or eliminated.

11. A system for personalizing applications of a mobile terminal SIM or USIM card according to claim 10, **characterized in that** the applications download module (5) has a control module (19) that receives the application in downloadable code form together with the terminal telephone number (MSISDN) introduced by the user and circulating with the application, and accesses the system users database (16) to determine if the SIM or USIM card has available space for downloading the application, and in an affirmative case consults, in the database (16), which protocol is supported by the SIM or USIM card as well as the chosen transport carrier, and sends the application to a load sub-module (17) that accesses a carrier module (18), which carries out the download, and the applications download module communicates this to the applications generator (4), whereas if it verifies that there is no available space, it indicates that there is not enough space to download the application, and the applications generator (4) informs the graphic user interface (1) so that the latter knows the result.

12. A system for personalizing applications of a mobile terminal SIM or USIM card according to claim 11, **characterized in that** prior to downloading an application through the download module (5), the applications generator (4) requests the elimination of the old application in the SIM or USIM card, and the download module (5) responds indicating if it has carried out the operation, has not carried it out due to an error or because there was no application to erase, and the applications generator module requests the application load operation, except in the case in which it was not carried out due to an error.

13. A system for personalizing applications of a mobile terminal SIM or USIM card according to claim 11, **characterized in that** the applications download module (5) comprises a plurality of load sub-modules (17) depending on the number of applications load/download protocols supported by the SIM or USIM card.

14. A system for personalizing applications of a mobile terminal SIM or USIM card according to claim 13, **characterized in that** each load sub-module (17) is connected to a plurality of transport carrier modules (18) for supporting a plurality of carriers.
